(19) Europäisches Patentamt
European Patent Office
Office européen des brevets

(11) Veröffentlichungsnummer: **0 146 827**
**B1**

# (12) EUROPÄISCHE PATENTSCHRIFT

(45) Veröffentlichungstag der Patentschrift: **19.09.90**

(21) Anmeldenummer: **84114609.5**

(22) Anmeldetag: **01.12.84**

(51) Int. Cl.$^5$: **C 08 G 77/42**, C 08 G 77/38, C 08 G 63/68

## (54) Thermoplastische Polysiloxan-Polyester(carbonat)-Block-copolymere, ihre Herstellung und Verwendung.

(30) Priorität: **13.12.83 DE 3344911**

(43) Veröffentlichungstag der Anmeldung:
**03.07.85 Patentblatt 85/27**

(45) Bekanntmachung des Hinweises auf die Patenterteilung:
**19.09.90 Patentblatt 90/38**

(84) Benannte Vertragsstaaten:
**DE FR GB IT NL**

(56) Entgegenhaltungen:
**EP-A-0 036 080**
**EP-A-0 088 322**
**DE-A-2 640 241**
**US-A-3 701 815**

**Römpps Chemielexikon, Stichwort "Silikone"**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Schmidt, Manfred, Dr.**
**Bodelschwinghstrasse 20**
**D-4150 Krefeld (DE)**
Erfinder: **Paul, Winfried, Dr.**
**Bethelstrasse 22**
**D-4150 Krefeld (DE)**
Erfinder: **Freitag, Dieter, Dr.**
**Hasenheide 10**
**D-4150 Krefeld 1 (DE)**
Erfinder: **Rathmann, Dietrich, Dr.**
**Alte Landstrasse 119**
**D-5090 Leverkusen 1 (DE)**

**EP 0 146 827 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Polysiloxan-Polyester-Blockcopolymere mit Siloxangehalten von 90 bis 10 Gew.-%, bezogen auf Blockcopolymer, werden in der DE—OS 2 001 945 (US—PS 3 701 815) beschrieben. Diese Blockcopolymere sind Elastomere oder starre Copolymere, deren Wärmeformbeständigkeiten deutlich unter denen der zugrunde liegenden Polyester liegen.

Polysiloxan-Polyestercarbonat-Blockcopolymere mit 45 bis 60 Gew.-% an Polysiloxansegmenten werden in der DE—OS 2 640 241 beschrieben. Diese Polymere sind elastomere Thermoplaste verbesserter Zugfestigkeit bei Hitzesterilisationstemperaturen, wobei jedoch die Wärmeformbeständigkeiten dieser Blockcopolymeren wesentlich niedriger als die der nicht polysiloxanhaltigen Polyestercarbonate sind.

Aromatische Polyester auf Basis von Bisphenolen und Iso-/Terephthalsäure sind bekannt und werden z.B. von W. M. Eareckson, J. Polym. Sci. XL, 399—406 (1959) oder in den Patentschriften FR 1 177 517, US 3 351 624, DE 2 714 544, 2 758 030 beschrieben. Aromatische Polyestercarbonate auf Basis von Bisphenolen, Kohlensäure sowie Iso-/Terephthalsäure sind gleichfalls bekannt und werden z.B. in den EP—PS 10 840, DE—PS 3 016 019, 2 714 544 und US—PS 3 207 814 beschrieben. Diese Polykondensate werden aufgrund ihrer ausgezeichneten Eigenschaften überall dort eingesetzt, wo hohe Wärmeformbeständigeit und Zähligkeit erwünscht sind.

Aufgrund hoher Erweichungspunkte und relativ hoher Schmelzviskositäten ergeben sich für aromatische Polyester und Polyestercarbonate oftmals Verarbeitungsschwierigkeiten. Deshalb ist es von wesentlichem technischem Interesse, die Fließfähigkeit der Schmelze zu erhöhen, ohne die vorteilhaften anderen technologischen Eigenschaften der Polykondensate negativ zu beeinflussen.

Zahlreiche Versuche zur Lösung dieser Problematik wurden unternommen, wobei einerseits die Legierungsbildung mit anderen Thermoplasten (DE—OS 2 333 017, japanische veröffentlichte Patentanmeldung 75/5444, DE—OS 2 646 728) vorgeschlagen, andererseits das Zumischen niedermolekularer Hilfsmittel empfohlen wird (japanische veröffentlichte Patentanmeldungen 74/34546, 74/86433, 76/37146).

Beide Methoden verbessern wohl die Fließfähigkeit der aromatischen Polyesterformassen; jedoch werden gleichzeitig andere wesentliche technologische Eigenschaften, wie insbesondere die Wärmeformbeständigkeit, gemindert. Aufgabe der Erfindung war es daher, ohne Verschlechterung der Wärmeformbeständigkeit eine bessere thermoplastische Verarbeitbarkeit von aromatischen Polyestern und Polyestercarbonaten durch eine Modifizierung des Makromoleküls zu erreichen.

Gegenstand der Erfindung sind daher Siloxan-Polyester(carbonat)-Blockcopolymere mit wiederkehrenden Struktureinheiten der Formeln

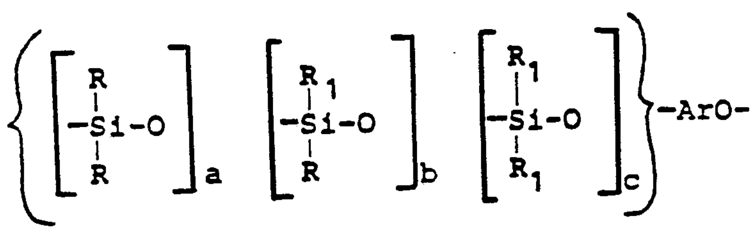

(I)

und

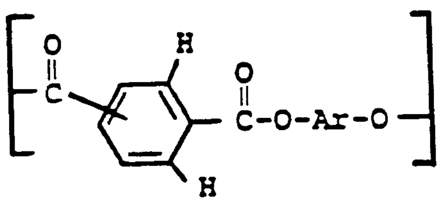

(II)

oder

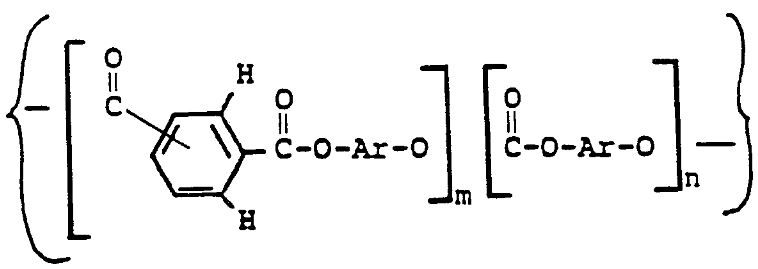

(III)

worin

R und $R_1$ jeweils gegebenenfalls durch Halogen substituiertes $C_1$—$C_{20}$-Alkyl, $C_2$—$C_6$-Alkenyl, $C_6$—$C_{14}$-Aryl, $C_7$—$C_{15}$-Aralkyl oder $C_7$—$C_{15}$-Alkaryl,

a, b und c zusammen eine Zahl won 10 bis 100, vorzugsweise 20 bis 80,

Ar einen ein- oder mehrkernigen aromatischen Rest mit 6 bis 30 C-Atomen bedeuten und

das Verhältnis m/n 1:9 bis 9:1, insbesondere 3:7 bis 7:3 ist, die dadurch gekennzeichnet sind, daß die Struktureinheiten I 0,5 bis 7,5, vorzugsweise 1 bis 5 Gew.-% und die Summe der Struktureinheiten II und III 99,5 bis 92,5, vorzugsweise 99 bis 95 Gew.-% des Siloxan-Polyester(carbonat)-Blockcopolymeren (ohne Berücksichtigung der Endgruppen), und das Verhältnis der Iso- zu Terephthalsäureeinheiten in den Struktureinheiten II und III 3:7 bis 7:3, vorzugsweise 4,5:5,5 bis 5,5:4,5 betragen.

Die Länge der Blöcke II und III ergibt sich aus der Zahl und Länge der Blöcke I und der Bedingung I+II+III = 100%.

Die erfindungsgemäßen Siloxan-Polyester(carbonat)-Blockcopolymere können erhalten werden, indem man mindestens ein Bisphenol der Formel

$$HO—Ar—OH \qquad (IV)$$

und mindestens ein Diorganosiloxan der Formel

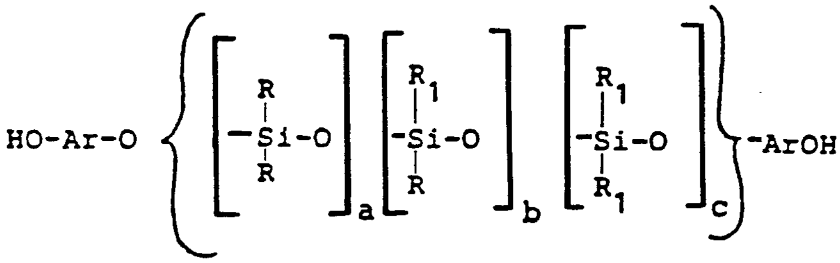

(V)

mit Gemischen der Dichloride der Iso- und Terephthalsäure und gegebenenfalls mit Phosgen in einem Zweiphasensystem aus wäßriger Alkalilösung und einem mit Wasser nicht mischbaren organischen Lösungsmittel in einer Phasengrenzflächenreaktion in Gegenwart eines Katalysators und gegebenenfalls von Kettenabbrechern, Verzweigern und Antioxidantien umsetzt, wobei Ar, R, $R_1$, a, b und c die vorstehend genannte Bedeutung besitzen.

Besonders bevorzugte Diphenole der Formel (IV) sind Hydrochinon, Resorcin und solche, bei denen Ar der Formel

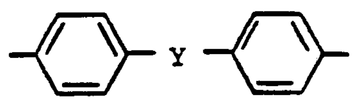

entspricht, worin

Y eine Einfachbindung, einen Alkylen- oder Alkylidenrest mit 1—7 C-Atomen, einen Cycloalkylen- oder Cycloalkylidenrest mit 5—12 C-Atomen, —O—, —S—,

$$-\underset{\underset{O}{\|}}{S}-, -SO_2- \text{ oder } -\underset{\underset{O}{\|}}{C}- \text{ bedeutet}$$

sowie deren kernalkylierte und kernhalogenierte Derivate, z.B. Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfoxide, Bis-(hydroxyphenyl)-sulfone und α,α'-Bis-(hydroxyphenyl)-diisopropylbenzole

sowie deren kernalkylierte und kernhalogenierte Verbindungen, insbesondere z.B. Bisphenol A, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenyl, 4,4'-Dihydroxydiphenylsulfon sowie deren di- und tetrahalogenierten Derivate. Besonders bevorzugt ist Bisphenol A.

Als Kettenabbrecher werden vorzugsweise Phenol, Alkylphenole mit $C_1$—$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$—$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichlorid) verwendet.

Als Verzweigungsmittel lassen sich vorzugsweise 3- oder mehrfunktionelle Carbonsäurechloride oder 3- oder höherwertige Phenole in Menge von 0,01 bis 1 Mol-%, bezogen auf eingesetzte Dicarbonsäurechloride bzw. auf eingesetzte Diphenole, verwenden.

Als Katalysator für die Polykondensationsreaktion können 0,5 bis 5 Mol-% (bezogen auf die Summe der Mole aus eingesetzten Diphenolen und Diorganosiloxanen) quartärer Ammonium- oder

Phosphoniumverbindungen oder tertiärer Amine in die wäßrige alkalische Phase eingetragen werden.

Bevorzugte Katalysatoren entsprechen der Formel

$$\begin{array}{c} R^3 \\ | \\ R^2—A^{\oplus}—R^4 \\ | \\ R^5 \end{array} \quad X^{\ominus}$$

worin

A ein Stickstoff- oder Phosphoratom,

X Chlor oder Brom und

$R^2$, $R^3$, $R^4$, $R^5$ $C_1$—$C_{20}$-Alkyl, $C_5$—$C_{10}$-Cycloalkyl, $C_7$—$C_{30}$-Alkaryl oder -Aralkyl bedeuten und zwei der Reste $R^2$ bis $R^5$ gegebenenfalls verknüpft sind,

oder der Formel

$$\begin{array}{c} R^3 \\ | \\ R^2—N—R^4 \end{array}$$

worin $R^2$, $R^3$, $R^4$, die vorstehend genannten Bedeutungen besitzen und zwei der Reste $R^2$ bis $R^4$ gegebenenfalls verknüpft sind.

Insbesondere bevorzugte Katalysatoren sind Tetrabutylammoniumbromid, Triphenylbenzylphosphoniumbromid, N-Ethyl-piperidin.

Bevorzugte organische, mit Wasser nicht mischbare Lösungsmittel sind beispielsweise Dichlormethan, Chloroform, Tri- und Tetrachlorethylen, Tetrachlorethane, Chlorbenzol, Dichlorbenzole und deren Gemische.

Man geht zweckmäßig so vor, daß man das Bisphenol in wäßrig alkalischer Phase löst, den Katalysatoren zusetzt, die wäßrige Lösung mit dem organischen Lösungsmittel überschichtet und in beliebiger Reihenfolge oder auch gleichzeitig das Diorganopolysiloxan, gelöst z.B. in dem schon zuvor verwendeten organischen Lösungsmittel, den Kettenabbrecher, das Iso-/Terephthalsäuredichloridgemisch, gelöst z.B. in dem schon zuvor verwendeten organischen Lösungsmittel, und gegebenenfalls Phosgen einträgt.

Man hält die Reaktion unter intensivem Rühren und unter Ausschluß von Luftsauerstoff bei 0 bis 40°C, vorzugsweise 15 bis 30°C.

Die Reaktion dauert etwa 10—60 Minuten. Man isoliert die organische Phase, wäscht diese und isoliert das Polymer durch Abdampfen des organischen Lösungsmittels, z.B. in einem Ausdampfextruder.

Die erfindungsgemäßen Blockpolymeren besitzen ein mittleres Molekulargewicht von $\overline{M}_W$ (Gewichtsmittel, bestimmt durch Ultrazentrifugation oder Streulichtmessung) von 10 000 bis 200 000, vorzugsweise von 15 000 bis 50 000 und relative Lösungsviskositäten $\eta_{rel}$ von 1,15 bis 2,15, vorzugsweise 1,20 bis 1,50, gemessen in 0,5 gew.%iger Lösung in Dichlormethan bei 25°C.

Die erfindungsgemäß mit Siloxan-Blöcken modifizierten aromatischen Polyester und Polyestercarbonate zeigen im Vergleich zu den unmodifizierten aromatischen Polyestern und Polyestercarbonaten eine wesentlich verbesserte Schmelzfließfähigkeit und ein verbessertes Entformungsverhalten ohne Minderung der Wärmeformbeständigkeit.

Dadurch wird die technische Verwendung der erfindungsgemäßen siloxan-modifizierten Polyester bzw. Polyestercarbonate zur Herstellung von Formmassen nach thermoplastischen Verarbeitungsverfahren erleichtert.

Den erfindungsgemäßen Blockcopolymeren können gegebenenfalls noch Farbstoffe, Pigmente, Stabilisatoren, Flammschutzmittel oder Füllstoffe wie Glasfasern zugesetzt werden, ohne daß dadurch die durch die Siloxan-Modifizierung bewirkte Verbesserung des Schmelzfließverhaltens und der Entformung gemindert wird.

Die erfindungsgemäßen Blockcopolymere finden überall dort Anwendung, wo Formkörper in großer Stückzahl mit kurzen Zykluszeiten vollautomatisch im Spritzgießverfahren hergestellt werden, z.B. auf dem elektrotechnischen Gerätebausektor, z.B. für die Herstellung von Steckerleisten, Spulenkörpern, komplizierten Gehäusen und Schaltkästen.

Die Verbesserung des Entformungsverhaltens wird durch die Messung der bei der Entformung von Spritzgußmassen benötigten Entformungskräfte ermittelt. Hierbei wird der im Ölzylinder des Auswerfsystems bei der Entformung auftretende Druck über eine optisches und gleichzeitig schreibendes Anzeigegerät sichtbar gemacht. Hierbei wird der Druck in dem Auswerfersystem geprüft, der sich beim Füllen eines konischen Zylinders (35 mm Länge, 40 mm und 42 mm Durchmesser, Wandstärke 2 mm) durch das Polymer bei einer bestimmten Werkzeugtemperatur aufbaut.

Zur Messung der Schmelzfließfähigkeit werden auf einer Spritzgußmaschine des Typs Arburg E 270 (Hersteller: Fa. Arburg) unter einem Druck von 110 bar und bei Extrusionstemperaturen von 340 bis 360°C spiralenförmige Streifen mit den Abmessungen 2 mm × 8 mm hergestellt, wobei der Querschnitt des konischen Stangenausgusses 6 und 8 $mm^2$ beträgt. Die Formtemperatur beträgt 90°C. Die Länge der erhaltenen spiralenförmigen Streifen ist ein Proportionalmaß für die Schmelzfließfähigkeit des Polymers.

Zur Überprüfung des Molekülabbaus wurden jeweils nach dem Verspritzen der Flachspiralen die relativen Lösungsviskositäten der Polymeren gemessen, um sicherzustellen, daß keine scheinbare Fließfähigkeitsverbesserung infolge Molekulargewichtsverminderung durch Molekülabbau vorgetäuscht wird.

Beispiel 1

2214 g (9,71 Mol) Bisphenol A wurden enter Stickstoffatmosphäre in 1827,4 g (21,38 Mol) 46,8 gew.-%iger wäßriger Natronlauge und 56 l destilliertem Wasser gelöst.

Anschließend wurden unter Rühren 32,2 g (1 Mol % bezogen auf Bisphenol) Tetrabutylammoniumbromid 11,7 l Dichlormethan und 6,3 l Chlorbenzol zugegeben.

Zu diesem Reaktionsgemisch wurde unter intensivem Rühren eine Lösung von 179 g (0,20 Mol) des Diorganosiloxans der Formel V/l

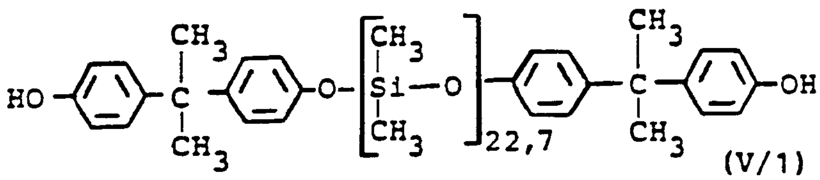

(V/1)

in 1421 g Chlorbenzol eingetragen.

Bei einer Temperatur von 20 bis 25°C wurde anschließend innerhalb von 2 Minuten eine Lösung von 1015 g (5 Mol) Terephthalsäuredichlorid, 1015 g (5 Mol) Isophthalsäuredichlorid und 119,5 g p-Isooctylphenol (5,8 Mol %, bezogen auf Mole Bisphenol A plus Diorganosiloxan) in 3045 g Chlorbenzol in das Reaktionsgemisch unter Rühren eingetragen. Man ließ bei pH = 11—12 ca. 50 Minuten nachreagieren, isolierte die organische Phase, wusch diese elektrolytfrei und isoliert das resultierende Polymer nach Eingengen der organischen gewaschenen Lösung über einen Ausdampfextruder (Massetemperatur: 325°C).

Man erhielt 3,8 kg eines Siloxan-Polyester-Blockcopolymers mit einer relativen Lösungsviskosität $\eta_{rel}$ von 1,272. Der Gehalt an Dimethylsiloxanstrukturen betrug 4,4 Gew.-% (bestimmt durch NMR-Analyse).

Beispiel 2

Es wurde ein Siloxan-Polyester-Blockcopolymer synthetisiert analog der im Beispiel 1 genannten Verfahrensweise, wobei jedoch folgende Einwageänderungen vorgenommen wurden:

Es wurden 2254,9 g (9,89 Mol) Bisphenol A und 19,7 g (0,022 Mol) des Diorganosiloxans (V/1), gelöst in 1582 g Chlorbenzol, in das Reaktionsgemisch eingebracht, ohne Art und Menge der anderen Reaktionspartner zu ändern. Nach analoger Aufarbeitung erhielt man 3,9 kg eines Siloxan-Polyester-Blockcopolymers mit einer relativen Lösungsviskosität $\eta_{rel}$ von 1,268. Der Gehalt an Dimethylsiloxanstrukturen betrug 0,5 Gew.-% (bestimmt durch NMR-Analyse).

Beispiel 3

Es wurde ein Siloxan-Polyester-Blockcopolymer analog der in Beispiel 1 genannten Verfahrensweise synthetisiert, wobei jedoch folgende Einwageänderungen vorgenommen wurden:

Es wurden 2192,1 g (9,61 Mol) Bisphenol A und 268,5 g (0,30 Mol) des Diorganosiloxans (V/1), gelöst in 2130 g Chlorbenzol, in das Reaktionsgemisch eingetragen, ohne Art und Menge der anderen Reaktionspartner zu ändern. Nach analoger Aufarbeitung erhielt man 3,8 kg eines Siloxan-Polyester-Blockcopolymers mit einer relativen Lösungsviskosität $\eta_{rel}$ von 1,273. Der Gehalt an Dimethylsiloxanstrukturen betrug 6,7 Gew.-% (bestimmt durch NMR-Analyse).

Vergleichsbeispiel 1

Analog der in Beispiel 1 genannten Verfahrenweise wurde ein aromatischer Polyester auf Basis Bisphenol A, Iso-/Terephthsalsäure (1:1) und Isooctylphenol als Kettenabbrecher hergestellt, dessen relative Lösungsviskosität $\eta_{rel}$ 1,273 beträgt (Verwendung von 3,9 Mol-% Isooctylphenol).

<u>Vergleich technologischer Polymereigenschaften</u>

| Beispiel | $\eta$ rel Granulat | Kerbschlagzähigkeit[1] (bei 23°C) (kJ/m²) | Schlazähigkeit[1] (bei 23°C) (kJ/m²) | Wärmeformbeständigkeit nach Vicat-B[2] | Fließspiralenlänge (mm) bei: 340°C | 360°C |
|---|---|---|---|---|---|---|
| 1 | 1,272 | 23-angebrochen | n. g [3] | 189-190°C | 210 | 260 |
| 2 | 1,268 | 22 | n. g. | 189-190°C | 132 | 194 |
| 3 | 1,273 | 24-angebrochen | n. g. | 190°C | 242 | 281 |
| Vergleichsbeispiel 1 | 1,273 | 23 | n. g. | 190°C | 107 | 176 |

1) Kerbschlagzähigkeit und Schlagzähigkeit entsprechend DIN 53 453

2) Vicat-B-temperatur gemäß DIN 53 460

3) n.g. = nicht gebrochen

Vergleich des Entformungsverhaltens

| Beispiel | Minimum der gemessenen Entformungskraft (bar) | bei Temperatur (°C) |
|---|---|---|
| 1 | 13 bar | 179 |
| 2 | 19 bar | 182 |
| 3 | 11 bar | 176 |
| Vergleichs- beispiel 1 | 32 bar | 185 |

Beispiel 4

2153,7 g (9,446 Mol) Bisphenol A wurden unter Stickstoffatmosphäre in 1795,6 g (20,2 Mol) 45 gew.-%iger wäßriger Natronlauge und 64 l destilliertem Wasser gelöst.

Anschließend wurden unter Rühren 13,5 ml N-Ethylpiperidin (2 Mol-%, bezogen auf Bisphenol), 10,3 l Dichlormethan und 11,2 l Chlorbenzol zugegeben.

Zu diesem Reaktionsgemisch wurde unter intensivem Rühren eine Lösung von 138,73 g (0,155 Mol) des Diorganosiloxans gemäß Beispiel 1 in 1413 g Chlorbenzol eingetragen.

Bei einer Temperatur von 20 bis 25°C wurde anschließend innerhalb von 5 Minuten eine Lösung von 421,2 g (2,075 Mol) Terephthalsäuredichlorid, 421,2 g (2,075 Mol) Isophthalsäuredichlorid un 86,0 g (4,15 Mol-%, bezogen auf Mole Bisphenol A und Diorganosiloxan) p-Isooctylphenol in 1264 g Chlorbenzol in das Reaktionsgemisch unter Rühren eingetragen. Man ließ 1/2 Stunde bei pH 11—12 reagieren, fügte 840 g 45%iger wäßriger Natronlauge zu und leitete bei pH 13 innerhalb von 15 Minuten 890 g (9 Mol) Phosgen ein. Durch Zugabe von 100 g 45 gew.-%iger wäßriger Natronlauge wurde der pH-Wert während der Phosgeneinleitung auf 13 gehalten. Man ließ 15 Minuten nachreagieren, wusch die organische Phase elektrolytfrei und isolierte das Polymer wie im Beispiel 1 beschrieben.

Men erhielt 2,8 kg eines Siloxan-Polyestercarbonat-Blockcopolymeren mit einer relativen Lösungsviskosität $\eta_{rel}$ von 1,276. Der Gehalt an Dimethylsiloxanstrukturen betrug 4,3 Gew.-% (bestimmt durch NMR-Analyse). Gehalt an Estergruppen im Polyestercarbonatblockanteil: 50,1 Mol-% (bestimmt durch Totalverseifung).

Vergleichsbeispiel 2

2280 g (10 Mol) Bisphenol A wurden unter Stickstoffatmosphäre in einer Lösung von 808 g (20,2 Mol) Natriumhydroxid in 64 l destilliertem $H_2O$ gelöst. Unter Rühren wurden 13,5 ml (2 Mol-%, bezogen auf Bisphenol A) N-Ethylpiperidin, 10,3 l Dichlormethan und 11,2 l Chlorbenzol zugegeben. Zu diesem Reaktionsgemisch wurde unter intensivem Rühren eine Lösung von 421,2 g (2,075 Mol) Terephthalsäuredichlorid, 421,2 g (2,075 Mol) Isophthalsäuredichlorid und 82,0 g (4,0 Mol-%, bezogen auf Bisphenol A) p-Isooctylphenol in 1264 g Chlorbenzol innerhalb von 5 Minuten eingetragen. Man ließ eine 1/2 Stunde bei pH 11—12 reagieren, gab 7,5 l 5 gew.-%ige wäßrige Natronlauge zu und leitete bei pH 13 innerhalb von 15 Minuten 890 g (9 Mol) Phosgen ein. Durch Zugabe von 300 g 45 gew.-%iger wäßriger Natronlauge wurde eine pH-Wert von 13 eingehalten. Man ließ 15 Minuten nachreagieren, isolierte und wusch die organische Phase wie in Beispiel 4 und arbeitete analog auf. Man erhielt 3,0 kg eines aromatischen Polyestercarbonats, das 50 Mol-% Carbonatstrukturen und 50 Mol-% Iso-/Terephthalatstrukturen enthielt, wobie das Verhältnis von Isophthalat zu Terephthalat 1:1 war.

Die relative Lösungsviskosität des Polymers $\eta_{rel}$ betrug 1,278.

Vergleich der technologischen Polymereigenschaften

| Beispiel | $\eta_{rel}$ Granulat | Kerbschlagzähigkeit[1] (bei 23°C) (kJ/m²) | Schlagzähigkeit[1] (bei 23°C) (kJ/m²) | Wärmeformbeständigkeit nach Vicat-B[2] | Fließspiralenlänge (mm) bei 340° | 360° |
|---|---|---|---|---|---|---|
| 4 | 1,276 | n. g.[3] | 35 | 169°C | 460 | 640 |
| Vergleichsbeispiel 2 | 1,278 | n. g. | 34 | 169-170°C | 320 | 570 |

1) gemäß DIN 53 453

2) gemäß DIN 53 460

3) n.g. = nicht gebrochen

Vergleich des Entformungsverhaltens

| Beispiel | Minimum der gemessenen Entformungskraft (bar) | bei Temperatur (°C) |
|---|---|---|
| 4 | 8 | 159 |
| Vergleichs-beispiel 2 | 36 | 153 |

**Patentansprüche**

1. Siloxan-Polyester(carbonat)-Blockcopolymere mit wiederkehrenden Struktureinheiten der Formeln

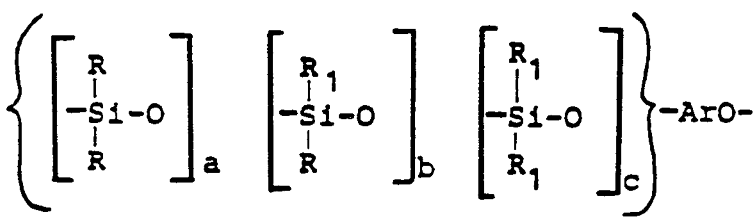

(I)

und

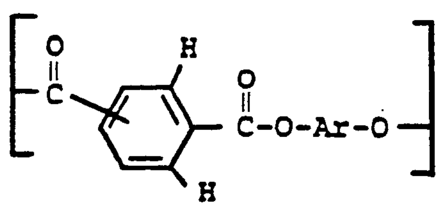

(II)

oder

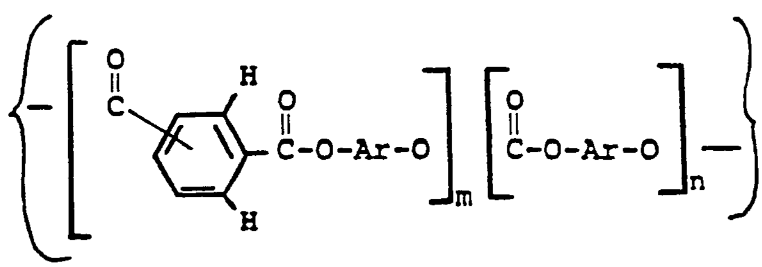

(III)

worin

R und $R_1$ jeweils gegebenenfalls durch Halogen substituiertes $C_1$—$C_{20}$-Alkyl, $C_2$—$C_6$-Alkenyl, $C_6$—$C_{14}$-Aryl, $C_7$—$C_{15}$-Aralkyl oder $C_7$—$C_{15}$-Alkaryl,

a, b und c zusammen eine Zahl won 10 bis 100,

Ar einen ein- oder mehrkernigen aromatischen Rest mit 6 bis 30 C-Atomen bedeuten und das Verhältnis m/n 1:9 bis 9:1 ist,

dadurch gekennzeichnet sind, daß die Struktureinheiten I 0,5 bis 7,5 Gew.-% und die Summe der Struktureinheiten II und III 99,5 bis 92,5 95 Gew.-% des Siloxan-Polyester(carbonat)-Blockcopolymeren (ohne Berücksichtigung der Endgruppen), und das Verhältnis der Iso- zu Terephthalsäureeinheiten in den Struktureinheiten II und III 3:7 bis 7:3 betragen.

2. Siloxan-Polyester(carbonat)-Blockcopolymere gemäß Anspruch 1, worin die Struktureinheiten I 1 bis 5 Gew.-% und die Struktureinheiten II und III 99 bis 95 Gew.-%, das Verhältnis m/n 1:9 bis 9:1 und das Verhältnisk der Iso- und Terephthalsäureeinheiten 4,5:5,5 bis 5,5:4,5 betragen.

3. Siloxan-Polyester(carbonat)-Blockcopolymere gemäß Anspruch 1, worin
R und $R_1$ Methyl,
a, b und c zusammen eine Zahl won 20 bis 80, das Verhältnis m/n 3:7 bis 8:2 und
Ar den Rest des Bisphenol A bedeuten, und das Verhältnis der Iso- und Terephthalsäureeinheiten 1:1 betragt.

4. Verfahren zur Herstellung der Siloxan-Polyester(carbonat)-Blockcopolymeren nach Anspruch 1, dadurch gekennzeichnet, daß man mindestens ein Bisphenol der Formel

HO—Ar—OH

und mindestens eine Diorganosiloxan der Formel

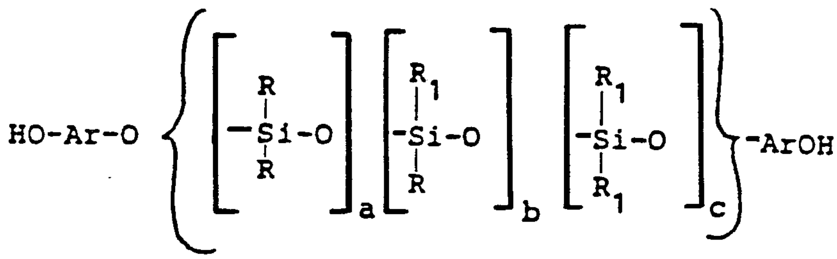

(V)

mit Gemischen der Dichloride der Iso- und Terephthalsäure und gegebenenfalls mit Phosgen in einem Zweiphasensystem aus wäßriger Alkalilösung und einem mit Wasser nicht mischbaren organischen Lösungsmittel in einer Phasengrenzflächenreaktion in Gegenwart eines Katalysators und gegebenenfalls von Kettenabbrechern, Verzweigern und Antioxidantien umsetzt, wobei Ar, R, $R_1$, a, b und c die in Anspruch 1 genannte Bedeutung besitzen.

5. Verwendung der Siloxan-Polyester(carbonat)-Blockcopolymere gemäß Anspruch 1 Herstellung von Formkörpern.

**Revendications**

1. Copolymères séquencés siloxanne-polyester(-carbonates) à motifs de structure répétés de formules

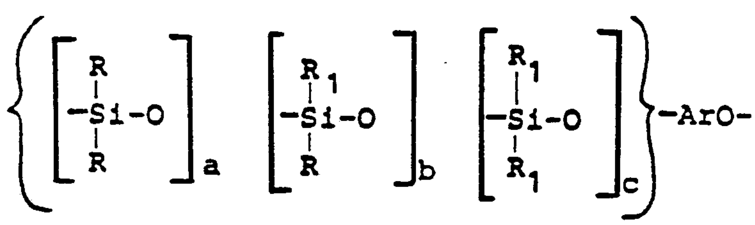

(I)

et

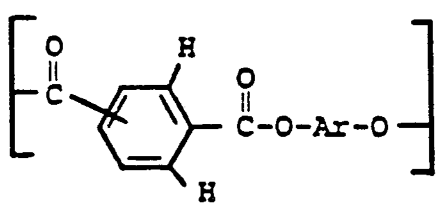

(II)

ou

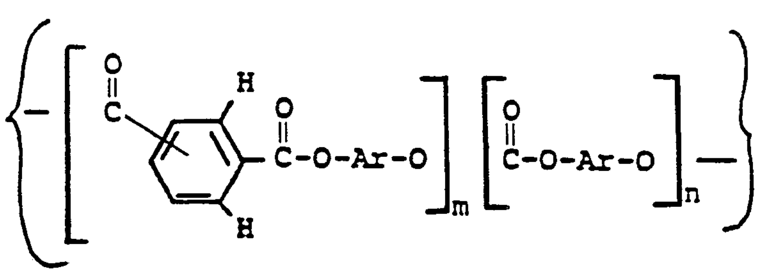

(III)

dans lesquelles

R et $R_1$ représentent chacun un groupe alkyle en $C_1$—$C_{20}$, alcényle en $C_2$—$C_6$, aryle en $C_6$—$C_{14}$, aralkyle en $C_7$—$C_{15}$ ou alkylaryle en $C_7$—$C_{15}$ éventuellement substitué par des halogènes,

a, b et c représentent au total un nombre de 10 à 100,

Ar représente un radical aromatique mono- ou poly-cyclique en $C_6$—$C_{30}$ et le rapport m/n va de 1:9 à 9:1,

caractérisés en ce que les motifs de structures I représentent de 0,5 à 7,5% du poids et la somme des motifs de structures II et III représente de 99,5 à 92,5% du poids du copolymère séquencé siloxanne-polyester(-carbonate) (non tenu compte des groupes terminaux) et le rapport des motifs d'acide isophthalique aux motifs d'acide téréphthalique dans les motifs de structures II et III va de 3:7 à 7:3.

2. Copolymères séquencés siloxanne-polyester(-carbonates) selon la revendication 1, dans laquelle les motifs de structure I représentent de 1 à 5% en poids et les motifs de structure II et III de 99 à 95% en poids, le rapport m/n va de 1:9 à 9:1 et le rapport entre les motifs d'acide isophtalique et les motifs d'acide téréphtalique va de 4,5:5,5 à 5,5:4,5.

3. Copolymères séquencés siloxanne-polyester(-carbonates) selon la revendication 1, dans lesquels

R et $R_1$ représentent des groupes méthyle,

a, b et c représentent au total un nombre de 20 à 80, le rapport m/n va de 3:7 à 8:2 et

Ar est le radical du bisphénol A, et le rapport entre les motifs d'acide isophtalique et les motifs d'acide téréphtaliques est de 1:1.

4. Procédé de préparation des copolymères séquencés siloxanne-polyester(-carbonates) selon la revendication 1, caractérisé en ce que l'on fait réagir au moins un bisphénol de formule

HO—Ar—OH

et au moins un diorganosiloxanne de formule

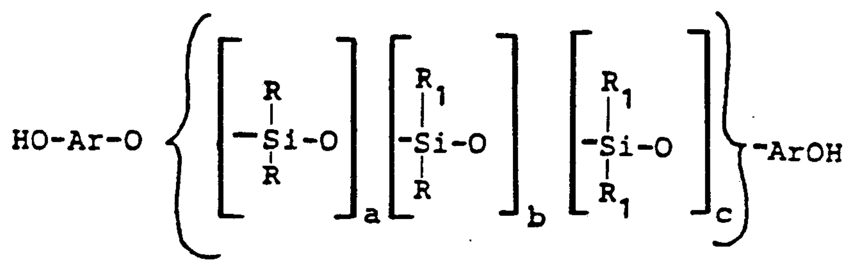

(V)

avec des mélanges des dichlorures des acides iso- et téréphtaliques et le cas échéant avec le phosgène dans un système à deux phases consistant en une solution aqueuse d'un alcali et un solvant organique non miscible à l'eau, dans une réaction aux interfaces de phases, en présence d'un catalyseur et le cas échéant de coupeurs de chaînes, d'agents ramifiants et d'antioxydants, Ar, R, $R_1$, a, b et c ayant les significations indiquées dans la revendication 1.

5. Utilisation des copolymères séquencés siloxanne-polyester(-carbonates) selon la revendication 1 pour la fabrication d'objets moulés.

**Claims**

1. Siloxane-polyester(carbonate) block copolymers containing recurring structural units corresponding to the following formulae

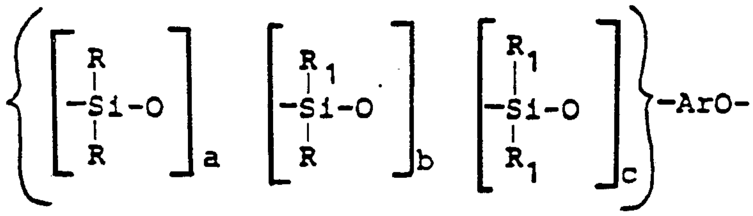

(I)

and

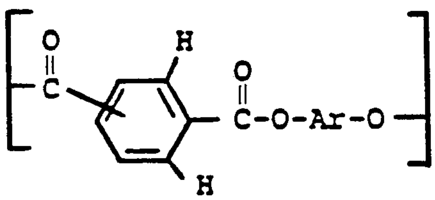

(II)

or

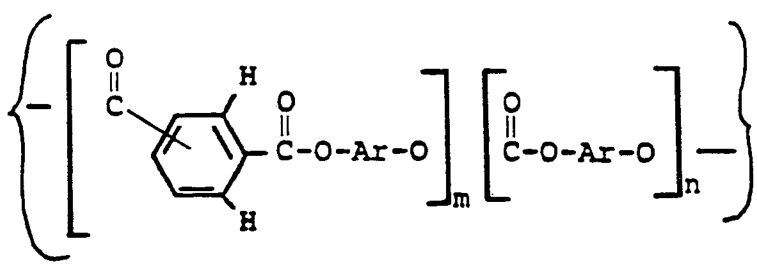

(III)

in which

R and $R_1$ represent optionally halogen-substituted $C_{1-20}$ alkyl, $C_{2-6}$ alkenyl, $C_{6-14}$ aryl, $C_{7-15}$ aralkyl or $C_{7-15}$ alkaryl,

a, b and c together represent a number of 10 to 100,

Ar is a mono- or polynuclear aromatic radical containing 6 to 30 C atoms and the ratio of m to n is 1:9 to 9:1, characterized in that the structural units I make up 0.5 to 7.5% by weight and the sum of the structural units II and III 99.5 to 92.5% by weight of the siloxane-polyester(carbonate) block copolymer (not including the terminal groups) and the ratio of isophthalic to terephthalic acid units in the structural units II and III is 3:7 to 7:3.

2. Siloxane-polyester(carbonate) block copolymers as claimed in claim 1, in which the structural units I make up from 1 to 5% by weight and the structural units II and III 99 to 95% by weight, the ratio of m to n is 1:9 to 9:1 and the ratio of the isophthalic acid to the terephthalic acid units is from 4.5:5.5 to 5.5:4.5.

3. Siloxane-polyester(carbonate) block copolymers as claimed in claim 1, in which

R and $R_1$ represent methyl,

a, b and c together represent a number of 20 to 80,

the ratio of m to n is 3:7 to 8:2,

Ar represents the residue of the bisphenol A and the ratio of the isophthalic acid units to the terephthalic acid units is 1:1.

4. A process for the production of the siloxane-polyester(carbonate) block copolymers as claimed in claim 1, characterized in that at least one bisphenol corresponding to the following formula

HO—Ar—OH

and at least one diorganosiloxane corresponding to the following formula

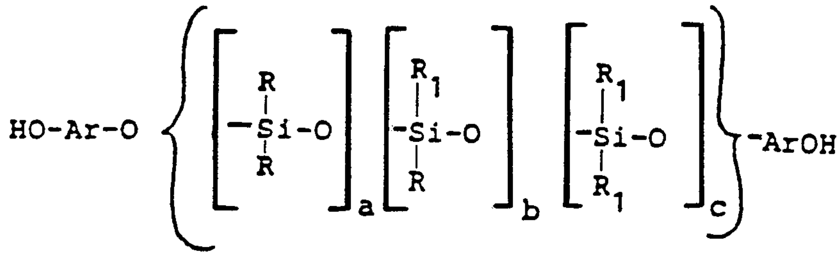

(V)

is reacted with mixtures of the dichlorides of isophthalic and terephthalic acid and optionally with phosgene in a two-phase system of aqueous alkali solution and a water-immiscible organic solvent in an interfacial reaction in the presence of a catalyst and, optionally, chain terminators, branching agents and antioxidants, Ar, R, $R_1$, a, b and c being as defined in claim 1.

5. The use of the siloxane-polyester(carbonate) block copolymers as claimed in claim 1 for the production of mouldings.